# EUROPÄISCHE PATENTSCHRIFT

(11) **EP 2 465 666 B1**
(45) Veröffentlichungstag und Bekanntmachung des Hinweises auf die Patenterteilung: **18.02.2015**
(21) Anmeldenummer: 11450106.7
(22) Anmeldetag: 26.08.2011
(51) Int. Cl.: B29C 65/36, H05B 6/14, B29K 101/12, B29K 705/12, B29D 23/00, F16L 13/02, F16L 47/03, F16L 59/20, H05B 6/36

(54) **Vorrichtung zum induktiven Verschweißen des thermoplastischen Mantelrohrs einer Fernwärmeleitung mit einer Muffe aus thermoplastischem Kunststoff**
Device for inductive welding of the thermoplastic jacket pipe of an area heating line with a sleeve made of thermoplastic
Dispositif de soudage inductif d'un manchon en matière thermoplastique sur la gaine thermoplastique d'une conduite de chauffage à distance

(30) Priorität: 14.12.2010 AT 20582010
(43) Veröffentlichungstag der Anmeldung: 20.06.2012
(73) Patentinhaber: KE-KELIT Kunststoffwerk Gesellschaft m.b.H., 4017 Linz (AT)
(72) Erfinder: Halada, Lucian, 4040 Linz (AT)
(74) Vertreter: Patentanwaltskanzlei Hübscher

(56) Entgegenhaltungen:
- EP-A2- 0 566 317
- WO-A1-2006/067728
- DE-A1- 2 242 369
- US-A- 3 238 346

## Beschreibung

Die Erfindung bezieht sich auf eine Vorrichtung zum induktiven Verschweißen des thermoplastischen Mantelrohrs einer Fernwärmeleitung mit einer Muffe aus thermoplastischem Kunststoff mit einer Manschette, die eine geteilte Induktionsspule, einen um die Muffe legbaren Träger für die geteilte Induktionsspule und eine Steckkupplung mit zwei Kupplungsteilen an den beiden Trägerenden zum Schließen der elektrischen Leiter der Windungen der Induktionsspule aufweist.

Zum Verbinden der einzelnen Schüsse einer Fernwärmeleitung müssen zunächst die für den Wärmeträger vorgesehenen Stahlrohre miteinander verschweißt werden, bevor die eine Wärmedämmung bildenden, die Stahlrohre umhüllenden Mantelrohre aus einem thermoplastischem Kunststoff miteinander über eine thermoplastische Verbindungsmuffe verbunden werden können. Zu diesem Zweck ist es bekannt (WO 2007/128384 A2), zwischen der Muffe und den zu verbindenden Rohren aus thermoplastischem Kunststoff je einen in sich geschlossenen Ring aus einem Lochblech einzulegen, um dann mit Hilfe einer die Muffe im Bereich des Lochblechrings umschließenden Induktionsspule im Lochblechring Wirbelströme zu induzieren, über die das Lochblech mit der Folge erwärmt wird, dass der thermoplastische Kunststoff der Muffe und der zu verbindenden Mantelrohre im Verbindungsbereich aufgeschmolzen wird, sodass sich durch das Lochblech hindurch eine innige Schweißverbindung zwischen der Muffe und den Mantelrohren einstellt. Damit die Induktionsspule in einfacher Weise um die Muffe gelegt werden kann, ist sie in einem nach Art einer Laschenkette ausgebildeten Träger angeordnet (WO 2006/067728 A1, WO 2007/128384 A2), der an seinen beiden Enden die beiden Kupplungsteile einer Steckkupplung zum Verbinden der elektrischen Leiter für die Windungen der geteilten Induktionsspule aufweist. Es braucht daher lediglich die Laschenkette mit den elektrischen Leitern für die Windungen der Induktionsspule um die Muffe gelegt und die Steckkupplung geschlossen zu werden, um die Induktionsspule über einen entsprechenden Frequenzgenerator mit der erforderlichen Spannung zu versorgen. Nachteilig ist allerdings, dass die Länge der Laschenkette und damit die Länge der Windungen der Induktionsspule vom jeweiligen Außendurchmesser der Muffe abhängt, was unterschiedliche Laschenketten mit entsprechenden Windungen der Induktionsspule für unterschiedliche Muffendurchmesser erfordert. Da Fernwärmerohre in einem weiten Nenndurchmesserbereich zum Einsatz kommen, sind die bekannten Vorrichtungen dieser Art für das Induktionsschweißen von Fernwärmerohrschüssen mit wechselndem Nenndurchmesser nicht praktikabel.

Darüber hinaus ist es zum Verschweißen von Muffen und Rohren aus Kunststoff bekannt (US 3 238 346), Iduktionsschleifen in Form eines Metallbandes vorzusehen, das austauschbar an einen in einem Handgerät integrierten Transformator anschließbar ist, um durch die Wahl von Metallbändern unterschiedlicher Längen eine Anpassung an unterschiedliche Rohrdurchmesser zu ermöglichen.

Schließlich ist es bei zangenartigen Schweißeinrichtungen zum Aufschmelzen einer Rohroberfläche mit Hilfe einer Heizmatte bekannt (DE 22 42 369 A), den einen Zangenarm mit einem Ende der Heizmatte gelenkig zu verbinden, während der andere Zangenarm mittels eines Hakens in einen von mehreren Schlitzen in der Heizmatte eingreift, sodass eine Anpassung an unterschiedliche Rohrdurchmesser möglich wird. Diese Anpassung ist allerdings auf Heizmatten beschränkt.

Der Erfindung liegt somit die Aufgabe zugrunde, eine Vorrichtung zum induktiven Verschweißen einer Muffe mit dem Mantelrohr einer Fernwärmeleitung so auszugestalten, dass eine einfache Anpassung an unterschiedliche Nenndurchmesser der Fernwärmerohre möglich wird, ohne das sichere Verschweißen der Muffe mit dem Mantelrohr zu gefährden.

Die Erfindung löst die gestellte Aufgabe dadurch, dass die elektrischen Leiter der Windungen der Induktionsspule in einem flexiblen Trägerband als Träger eingebettet sind, das bezüglich der Umfangslänge der Muffe eine Überlänge besitzt, und dass die Überlänge des durch wenigstens eine Schlaufenklemme geführten Trägerbands (5) in einer durch die Schlaufenklemme (11) abgeklemmten Schlaufe (10) gespeichert ist.

Durch diese Maßnahme wird es auf einfache Art möglich, die wirksame Umfangslänge des Trägerbands an die Umfangslänge der mit dem Mantelrohr zu verschweißenden Muffe anzupassen, weil ja die Überlänge des Trägerbands bezüglich der jeweiligen Muffe in der durch die Schlaufenklemme abgeklemmten Bandschlaufe gespeichert wird. In der abgeklemmten Trägerbandschlaufe hebt sich das induzierte Magnetfeld aufgrund der gegensinnigen Stromrichtungen in den einander gegenüberliegenden Abschnitten der ebenfalls schlaufenbildenden Windungen der Induktionsspule im Wesentlichen auf, sodass die durch die Schlaufenbildung bedingten Verluste klein gehalten werden können.

Besonders einfache Handhabungsbedingungen ergeben sich, wenn das Trägerband innerhalb der Schlaufenklemme verschiebbar geführt wird, weil in diesem Fall nach einem losen Umlegen des Trägerbands um die zu verschweißende Muffe und nach dem Schließen der Steckkupplung durch eine Verlängerung der abgeklemmten Schlaufe des Trägerbands ein sattes Anliegen des Trägerbands an der Muffe erreicht werden kann. Es braucht ja lediglich das Trägerband im Bereich der abgeklemmten Schlaufe bei einem gleichzeitigen Andrücken der Schlaufenklemme an die Muffe angezogen zu werden.

Obwohl durchaus Sonderkonstruktionen für das Trägerband mit den eingebetteten elektrischen Leitern für die Windungen der Induktionsspule möglich sind, ergeben sich besonders günstige Konstruktionsbedingungen, wenn das Trägerband mit den eingebetteten elektrischen Leitungen für die Windungen der Induktionsspule als Flachbandkabel mit einer der Windungsanzahl der Induktionsspule entsprechenden Mindestanzahl an Adern ausgebildet ist. Die Enden dieser Adern müssen ja nur über die Kupplungsteile der Steckkupplungen entsprechend verbunden werden, um die Windungen für die Induktionsspule zu erhalten.

Die Anordnung der elektrischen Leiter für die Windungen der Induktionsspule in einem Trägerband, dessen wirksame Länge durch das Abklemmen einer Bandschlaufe an die jeweilige Umfangslänge der zu verschweißenden Muffe angepasst werden kann, bringt zusätzlich die Möglichkeit mit sich, im Trägerband eine von der Induktionsspule gesonderte Messwindung zur Erfassung der Induktionsspannung vorzusehen. Eine Erfassung der Induktionsspannung über den zeitlichen Schweißverlauf lässt einen Rückschluss auf die Temperatur im Bereich der zwischen der Muffe und dem Mantelrohr einer Fernwärmeleitung vorgesehenen, metallischen Einlage zu. Der elektrische Widerstand dieser metallischen Einlagen nimmt mit steigender Temperatur zu, sodass zum Bereitstellen einer über den zeitlichen Schweißverlauf etwa gleichbleibenden Schweißenergie die Induktionsspannung vergrößert werden muss. Diese Änderung der Induktionsspannung erfolgt jedoch nicht linear. Aufgrund eines charakteristischen Anstiegs der Induktionsspannung am Ende des Schweißvorgangs lässt sich somit indirekt der Schweißvorgang überwachen. Die zusätzliche Messwindung im Trägerband liefert das hierfür erforderliche Messsignal, das entsprechend ausgewertet zur Steuerung des Schweißverlaufs genützt werden kann.

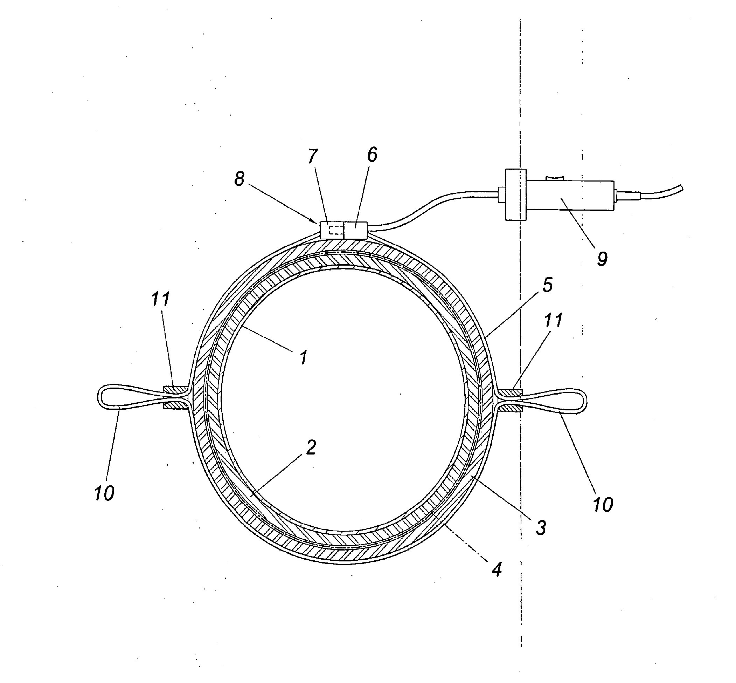

In der Zeichnung ist der Erfindungsgegenstand beispielsweise dargestellt, und zwar wird eine erfindungsgemäße Vorrichtung zum induktiven Verschweißen des thermoplastischen Mantelrohrs einer Fernwärmeleitung mit einer Muffe aus thermoplastischem Kunststoff in einem schematischen Schnitt senkrecht zur Achse der Fernwärmeleitung gezeigt.

Die Fernwärmeleitung umfasst ein mediumführendes Stahlrohr 1 mit einem wärme isolierenden Mantelrohr 2. Um zwei je aus einem Stahlrohr und einem Mantelrohr bestehende Schüsse der Fernwärmeleitung miteinander verbinden zu können, müssen nicht nur die Stahlrohrschüsse miteinander verschweißt, sondern auch die Mantelrohre 2 dieser Schüsse miteinander dicht über eine Muffe 3 verbunden werden. Zu diesem Zweck wird das thermoplastische Mantelrohr 2 mit der Muffe 3 aus thermoplastischem Kunststoff induktiv verschweißt. Um im Verbindungsbereich zwischen der Muffe 3 und dem Mantelrohr 2 Wirbelströme induzieren zu können, wird im Verbindungsbereich zwischen der Muffe 3 und dem Mantelrohr 2 ein metallischer Einsatz beispielsweise in Form eines zu einem Ring geschlossenen Streckgitters 4 vorgesehen, sodass die Wärme der in diesem Streckgitter 4 induzierten Wirbelströme die Muffe 3 und das Mantelrohr 2 im Verbindungsbereich aufschmilzt, wobei die Schmelze das Streckgitter 4 durchdringt und nach einem Erstarren eine zugfeste, dichte Verbindung zwischen dem Mantelrohr 2 und der Muffe 3 sicherstellt.

Die zum Induzieren der Wirbelströme im Streckgitter 4 benötigte Induktionsspule wird im Schweißbereich um die Muffe 3 gelegt. Damit eine Anpassung an unterschiedliche Muffendurchmesser möglich wird, weist die Vorrichtung eine um die Muffe 3 legbare Manschette aus einem Trägerband 5 auf, in das die elektrischen Leiter der Windungen für die Induktionsspule eingebettet sind. An den beiden Enden dieses Trägerbands 5 sind zwei Kupplungsteile 6, 7 einer Steckkupplung 8 angeordnet, mit deren Hilfe die elektrischen Leiter im Trägerband 5 zu Windungen der Induktionsspule geschlossen werden. Außerdem erfolgt der elektrische Anschluss der Induktionsspule über einen Kupplungsteil 6 der Steckkupplung 8. Über eine von Hand betätigbare Schalteinheit 9 kann die Induktionsspule über einen nicht dargestellten Hochfrequenzgenerator mit einer entsprechenden Spannung versorgt werden.

Das Trägerband 5 weist in Bezug auf die Umfangslänge der Muffe 3 eine Überlänge auf, die in Form zumindest einer vom übrigen Trägerband 5 abgeklemmten Schlaufe 10 gespeichert werden kann. Zum Abklemmen dieser Trägerbandschlaufen 10 dienen Schlaufenklemmen 11, die das Trägerband 5 verschiebbar führen, sodass durch ein Anziehen der Schlaufen 10 gegenüber der gegen die Muffe 3 gedrückten Schlaufenklemme 11 die Schlaufe 10 unter einem Anlegen des Trägerbands 5 an den Außenumfang der Muffe 3 vergrößert werden kann. Da sich im Bereich der Schlaufen 10 zwei einander gegenüberliegende Schlaufenabschnitte mit gegensinniger Stromrichtung ergeben, hebt sich das induzierte Magnetfeld weitgehend auf, sodass durch die Schlaufenbildung die Verluste gering bleiben. Das am Außenumfang der Muffe 3 anliegende, über die Steckkupplung 8 geschlossene Trägerband 5 stellt einen weitgehend gleichmäßigen Abstand der Induktionsspule vom Streckgitter 4 sicher. Durch die Anpassung der wirksamen Umfangslänge des Trägerbands 5 über die in ihrer Länge einstellbaren Schlaufen 10 lassen sich somit vorteilhafte Induktionsbedingungen für den Schweißvorgang einstellen.

## Patentansprüche

1. Vorrichtung zum induktiven Verschweißen des thermoplastischen Mantelrohrs (2) einer Fernwärmeleitung mit einer Muffe (3) aus thermoplastischem Kunststoff mit einer Manschette, die eine geteilte Induktionsspule, einen um die Muffe (3) legbaren Träger für die geteilte Induktionsspule und eine Steckkupplung (8) mit zwei Kupplungsteilen (6, 7) an den beiden Trägerenden zum Schließen der elektrischen Leiter der Windungen der Induktionsspule aufweist, **dadurch gekennzeichnet, dass** die elektrischen Leiter der Windungen der Induktionsspule in einem flexiblen Trägerband (5) als Träger eingebettet sind, das bezüglich der Umfangslänge der Muffe (3) eine Überlänge besitzt, und dass die Überlänge des durch wenigstens eine Schlaufenklemme (11) geführten Trägerbands (5) in einer durch die Schlaufenklemme (11) abgeklemmten Schlaufe (10) gespeichert ist.

2. Vorrichtung nach Anspruch 1, **dadurch gekennzeichnet, dass** das Trägerband (5) innerhalb der Schlaufenklemme (11) verschiebbar geführt ist.

3. Vorrichtung nach Anspruch 1 oder 2, **dadurch gekennzeichnet, dass** das Trägerband (5) mit den eingebetteten elektrischen Leitern für die Windungen der Induktionsspule als Flachbandkabel mit einer der Windungsanzahl der Induktionsspule entsprechenden Mindestanzahl an Adern ausgebildet ist.

4. Vorrichtung nach einem der Ansprüche 1 bis 3, **dadurch gekennzeichnet, dass** das Trägerband (5) eine von der Induktionsspule gesonderte Messwindung zur Erfassung der Induktionsspannung aufweist

## Claims

1. Apparatus for inductive welding of the thermoplastic casing pipe (2) of a long-distance heat pipeline, comprising a sleeve (3) consisting of a thermoplastic synthetic material having a collar which comprises a split induction coil, a carrier, which can be placed around the sleeve (3), for the split induction coil and a plug-in coupling (8) having two coupling parts (6, 7) on the two carrier ends for closing the electrical conductors of the windings of the induction coil, **characterised in that** the electrical conductors of the windings of the induction coil are embedded in a flexible carrier strip (5) as a carrier which has an excess length in relation to the circumferential length of the sleeve (3), and **in that** the excess length of the carrier strip (5), which is guided through at least one loop clamp (11), is stored in a loop (10) which is clamped by the loop clamp (11).

2. Apparatus as claimed in claim 1, **characterised in that** the carrier strip (5) is displaceably guided within the loop clamp (11).

3. Apparatus as claimed in claim 1 or 2, **characterised in that** the carrier strip (5) is formed with the embedded electrical conductors for the windings of the induction coil as a ribbon cable having a minimum number of cores corresponding the number of windings of the induction coil.

4. Apparatus as claimed in any one of claims 1 to 3, **characterised in that** the carrier strip (5) comprises a measurement winding, which is separate from the induction coil, for measuring the induction voltage.

## Revendications

1. Dispositif pour le soudage inductif d'un manchon (3) en matière thermoplastique sur la gaine thermoplastique (2) d'une conduite de chauffage à distance avec une manchette qui présente une bobine d'induction divisée, un support pouvant être placé autour du manchon (3), pour la bobine d'induction divisée, et un accouplement d'enfichage (8) avec deux éléments d'accouplement (6, 7) au niveau des deux extrémités du support pour la fermeture des conducteurs électriques des enroulements de la bobine d'induction, **caractérisé en ce que** les conducteurs électriques des enroulements de la bobine d'induction sont incorporés dans une bande de support (5) flexible en tant que support, qui possède, en ce qui concerne la longueur circonférentielle du manchon (3), une surlongueur et **en ce que** la surlongueur de la bande de support (5) guidée à travers au moins une borne de connexion à boucle (11) est stockée dans une boucle (10) enserrée à travers la borne de connexion à boucle (11).

2. Dispositif selon la revendication 1, **caractérisé en ce que** la bande de support (5) est guidée mobile au sein de la borne de connexion à boucle (11).

3. Dispositif selon la revendication 1 ou 2, **caractérisé en ce que** la bande de support (5) avec les conducteurs électriques incorporés pour les enroulements de la bobine d'induction est conçue en tant que câble plat électrique avec une quantité minimale correspondant au nombre d'enroulements de la bobine d'induction au niveau des conducteurs.

4. Dispositif selon l'une des revendications 1 à 3, **caractérisé en ce que** la bande de support (5) présente un enroulement de mesure séparé de la bobine d'induction pour la saisie de la tension d'induction.
